# EUROPEAN PATENT SPECIFICATION

(11) **EP 2 057 962 B1**
(45) Date of publication and mention of the grant of the patent: **02.05.2018**
(21) Application number: 07806113.2
(22) Date of filing: 28.08.2007
(51) Int. Cl.: A61C 3/02, B24D 7/18

(54) **DENTAL GRINDING BUR AND PROCESS FOR MANUFACTURING THE SAME**
ZAHNSCHLEIFWERKZEUG UND HERSTELLUNGSVERFAHREN DAFÜR
OUTIL ABRASIF DENTAIRE ET PROCÉDÉ DE FABRICATION DUDIT OUTIL

(30) Priority: 31.08.2006 JP 2006234725
(43) Date of publication of application: 13.05.2009
(73) Proprietor: MANI, INC., Utsunomiya-shi, Tochigi 321-3231 (JP)
(72) Inventor: MATSUTANI, Kanji, Utsunomiya-shi Tochigi 321-3231 (JP); TETSUKA, Satoshi, Utsunomiya-shi Tochigi 321-3231 (JP)
(74) Representative: Isarpatent
(86) International application number: PCT/JP2007/066591
(87) International publication number: WO 2008/026557

(56) References cited:
- GB-A- 1 446 444
- JP-A- 2005 211 094
- JP-B2- 03 062 089
- US-A- 4 869 788
- US-A1- 2006 019 218

## Description

### Technical field

The present invention relates to a dental grinding bur used for grinding teeth and the like in dental care. Particularly, it relates to marking for identifying types of dental grinding burs.

### Background art

The dental grinding bur used to grind teeth and the like has a shank, which is gripped by a chuck for an air motor and formed at the base end on one side of a rod-shaped base, and a grinding part at the tip of the other side to which abrasive grains are fixated. Use of plating to fixate the abrasive grains on the grinding part of the aforementioned dental grinding bur is common.

This method is described in Patent Document 1 (Patent No. JP 3140517 B), for example, and is carried out in the following manner. First, fill a plating solution in a plating tank, soak in the plating solution an unglazed container storing abrasive grains to be fixated to a grinding part, and soak an anode metal such as nickel at a position away from the container. The abrasive grains in the container are being soaked in the plating solution. Then, the part that will become the base grinding part is inserted into the container, and an electric current is sent to the base acting as a cathode. As a result, the anode metal such as nickel precipitates onto the surface of the grinding part, and the abrasive grains touching the surface of the grinding part are electrodeposited as the metal grows.

There are a variety of dental grinding burs different in type of abrasive grain and grain diameter, and they require distinction from one another. Normally, they can be distinguished by forming identification parts applied with different colored pigmented coating materials on the respective bases. The identification part has been formed by forming a groove in the center of the base and applying a coating material in this groove.

However, this method had the following problems. Firstly, there is a problem of increasing man-hours. When fixating the abrasive grains to the grinding part, it is covered with an insulating tape and the entire back end of the base from the middle of the covered part is masked through a dipping method so that the abrasive grains do not adhere to other parts besides the grinding part and that the grinding part end is finished nice and straight. Although the abrasive grains are fixated on only the grinding part in this manner, right after the abrasive grains are fixated, the tape and masking are removed and coating material is applied in the aforementioned groove. Namely, extra steps of wrapping the insulating tape and peeling off are required.

Secondly, there is a problem of decreasing base strength since a groove is formed in the base. Thirdly, although the dental grinding bur is gripped by a chuck for an air motor or the like and used, there is a problem of not being able to see the identification during use, and thus not being able to confirm the type of dental grinding bur.

As a means for resolving these problems, a method of forming an identification part by applying an insulating coating material without forming a groove at a position next to the base grinding part, and then by fixating the abrasive grains thereafter is proposed in Patent Document 2 (Japanese Published Examined Application No. Hei 3-62089).

Namely, applying an insulating coating material may double as covering with an insulating tape, thus reducing man-hours. Moreover, since a groove is not formed, decrease in strength may be avoided. Furthermore, formation of the identification part next to the grinding part allows visible identification of the identification part even when the dental grinding bur is in use.

US 4,869,788 A describes a dental diamond bar which is manufactured by applying colored paint to a bar body to form a paint-applied section. The colored paint may be applied by rotating the bar body and using a rotary blade, a lower portion of the rotary blade being immersed in the colored paint. US 2006/0019218 discloses a dental grinding bur comprising a rod-shaped base; a grinding part, which is at the tip of the base and fixated with abrasive grains; and an identification part, which is at the periphery of the base adjacent to the grinding part and coated with an insulating, pigmented coating material.

### Disclosure of invention

### [Problem to be solved by the Invention]

However, the dental grinding bur of the aforementioned Patent Document 2 also has a point that needs improvement. Namely, while thermosetting acrylic resin coating material and ultraviolet cure resin coating material are used as the insulating coating material, there is a problem that they easily peel off. For example, during electrodeposition of the abrasive grains, they may come off when touching the identification part, and during dental care, they may touch the affected area or adjacent tooth and may come off.

The method of forming a groove and applying a coating material therein is excellent as means for resolving this problem; however, there is the problem of reduction in strength. Moreover, a problem of increase in processing man-hours arises.

The present invention is devised to resolve such problems, and aims to provide a dental grinding bur with a coating material on the identification part that does not peel off easily and does not require formation of a groove in order to apply the coating material to the identification part.

### [Means of Solving the Problem]

A dental grinding bur of the present invention for achieving the aforementioned aim includes: a rod-shaped base; a grinding part, which is at the tip of the base and fixated with abrasive grains; and an identification part, which is at the periphery of the base adjacent to the grinding part and coated with an insulating, pigmented coating material. The identification part has a uniform circumferential thickness and an axial mountain shape. A dental grinding bur of the invention is manufactured by the dental grinding bur manufacturing method of claim 1.

The abrasive grains are diamond grains, and the diamond grains may be fixated to the grinding part through electrodeposition.

In addition, a dental grinding bur manufacturing method of the present invention includes the steps recited in claim 1.

The step of stopping rotation of the base and drying the coating material may be carried out with the base standing at the place where the base has been removed from a rotator. The painting member may have an inclined side that makes contact with the base to supply the coating material such that it runs down from above the inclined side to a contact section of the base. It may further include the step of attaching enough of the coating material to the painting member with the coating material having some surface tension, and applying the coating material from the painting member to the base so as for the applied coating material to be in an axial mountain shape.

### [Effects of Invention]

Enough of the pigmented coating material is applied to a portion of a constant width (approximately 1.4 mm), which becomes an identification part, by making the painting member make contact with the base rotating at a certain speed or faster (approximately 100 to 1000 rpm) so that the coating material is applied to the entire identification part in a curled up form due to the surface tension. Afterward, when the painting member is set apart from the base and rotation of the base is further continued, the coating material is pulled to the outer side by centrifugal force. Due to this centrifugal force, the coating material converges to the center of the identification part, and distributes thick at the center and in thin mountain shapes on either side. When rotation of the base continues, the coating material becomes semidry. Once it is semidry, the mountain shape may be maintained even if the rotation is stopped, it is left to dry. When the base is dried standing up, a uniform circumferential thickness may be retained without the coating material becoming circumferentially thicker on one side. In this case, while the mountain shape is slightly thicker in the direction of the gravitational force, even the mountain shape being thicker at one end is defined to be included in the 'mountain shape' here according to the present invention. While the base is normally made to stand with the grinding part on top, standing it with the grinding part at the bottom in a hung state is also possible. In this case, since the mountain shape is formed at a portion near the grinding part due to force of gravity, accidental electrodeposition of the abrasive grains on the bottom of the base may be prevented. Note that since a certain amount of viscosity is necessary for the coating material in order for it to be pulled to the outer side by centrifugal force, the viscosity of the coating material should be appropriately adjusted and then used.

Since the identification part formed as such has a thick coating film, the coating material does not peel off easily and improves in usability dramatically.

When the painting member has an inclined side that makes contact with the base to supply the coating material such that it runs down from above the inclined side to a contact section of the base, the coating material may be sufficiently supplied, thereby preventing an imperfect coat due to lack of the coating material. Moreover, when enough of the coating material is attached to the painting member with the coating material keeping some surface tension, it may be applied from the painting member to the base in an axial mountain shape, and the dental grinding bur according to the present invention may be formed even if it is not at a speed that forms a thick mountain shape at the axial center by centrifugal force (e.g., 10 rpm) .

### Brief description of drawings

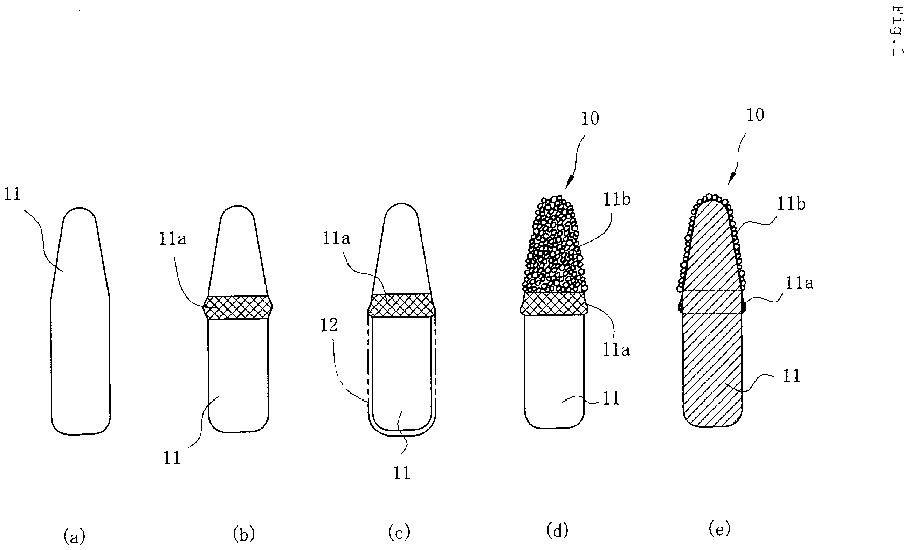

FIG. 1 is a diagram describing a method of forming a dental grinding bur according to the present invention, where (a) is a front view of a base, (b) is a front view of the base applied with a coating material, (c) is a drawing showing masking part by a virtual line with a completed identification part, (d) is a front view of the dental grinding bur according to the present invention completed, and (e) is a vertical section of the dental grinding bur according to the present invention; and

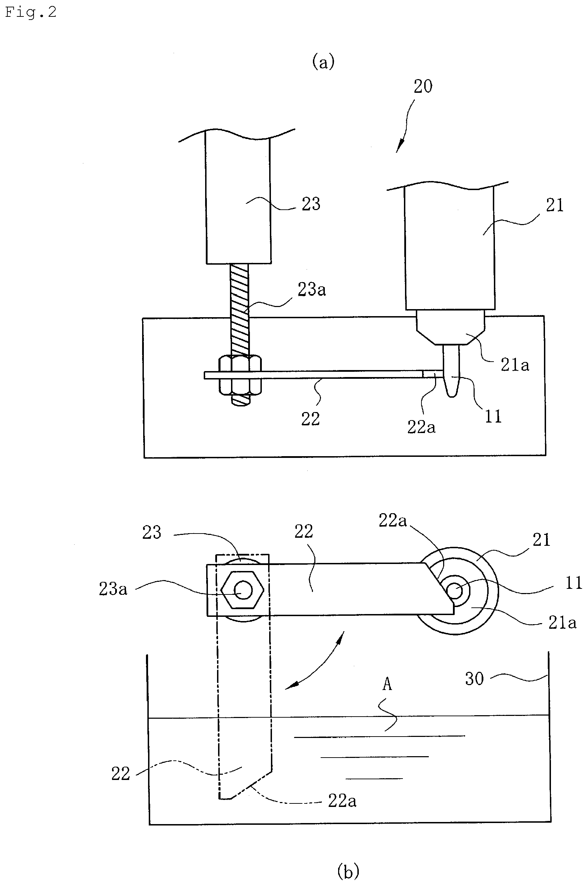

FIG. 2 is a diagram showing main parts of a coating device, where (a) is a top view and (b) is a front view.

### [Description of reference number]

- 10:: Dental grinding bur
- 11:: Base
- 11a:: Identification part
- 20:: Coating device
- 21:: Rotator
- 21a:: Chuck
- 22:: Painting member
- 22a:: Inclined side
- 23:: Drive unit
- 23a:: Rotating shaft
- 30:: Container
- A:: Insulating pigmented coating material

### Best mode of carrying out the invention

An embodiment according to the present invention is described with reference to attached drawings forthwith.

FIG. 1 is a diagram describing a method of forming a dental grinding bur according to the present invention, where (a) is a front view of a base, (b) is a front view of the base applied with a coating material, (c) is a drawing showing masking part by a virtual line with a completed identification part, (d) is a front view of the dental grinding bur according to the present invention completed, and (e) is a vertical section of the dental grinding bur according to the present invention.

A base 11 of a dental grinding bur 10 according to the present invention uses stainless steel due to it being tough against rust. The base 11 is formed by processing the tip of a stainless steel round bur into a tapered form and cutting it into a predetermined size. The stainless steel may be martensitic stainless steel or austenitic stainless steel.

FIG. 2 is a diagram showing main parts of a coating device 20, where (a) is a top view and (b) is a front view. The coating device 20 has a rotator 21 and a painting member 22. The painting member 22 is a plate-like member, fixed to a rotating shaft 23a of a drive unit 23, and rotates approximately 90 degrees in both directions, alternatively selecting a position indicated by a virtual line and position indicated by a solid line in FIG. 2(b).

The base 11 shown in FIG. 1(a) is held by the chuck 21a of the rotator 21 to rotate the base 11. There is a container 30 including an insulating pigmented coating material A below the chuck 21a of the rotator 21, and when the painting member 22 is at the position indicated by the virtual line, the tip of the painting member 22 is soaked in the pigmented coating material A, thereby the pigmented coating material A adhering thereto. There is an inclined side 22a at the tip of the painting member 22, and when it is rotated 90 degrees counterclockwise from the position of the virtual line to the position of the solid line, the lower side of the inclined side 22a makes contact with the base 11, applying the pigmented coating material A on the base 11. Giving the base 11 a fixed length, and making the position at which the chuck 21a holds the base 11 be a fixed position allows application of the pigmented coating material A to the portion that becomes an identification part 11a.

Since the coating material runs down the inclined side 22a of the painting member 22, sufficient coating material continues to be supplied to the contact section of the base 11 and the painting member 22, and thus the pigmented coating material A is applied to the periphery of the base 11 in a uniform thickness.

Once application of the coating material is finished, the painting member 22 is rotated 90 degrees clockwise, moving to the position of the virtual line. Meanwhile, the base continues to rotate. Due to this continual rotation, the coating material spreads to the periphery in a uniform thickness, and the outer side swells due to a centrifugal force being simultaneously given to the coating material. The easiest to swell is the central portion of the identification part 11a, where the coating material converges in the center from both sides of the identification part 11a and distributes in a mountain shape as shown in FIG. 1(b). Note that when it continues to rotate, the coating material begins to dry. Then, when it becomes semidry, the distribution state of the mountain-shaped coating material is preserved even if the rotation stops.

Once in this state, the rotator 21 is stopped, the chuck 21a is loosened to remove the base 11, and the base 11 is retained standing in a place not shown in the drawing to completely dry the coating material. Once the coating material has dried, the base 11 is retained in a state indicated by a solid line in FIG. 1(c). When vertically standing the base 11 to dry, the coating material may sag down slightly in the case of an insufficient pre-dried state. In that case, the thickness of the coating material when dried is not a symmetrical mountain shape but its mountain apex slips lower.

Next, as shown in FIG. 1(c), a grinding part 11b is formed by covering a masking 12 over the entire lower half of the base 11 from the middle of the identification part 11a and inserting it in a plating tank to electrodeposit the abrasive grains, and then by peeling off the masking 12, a dental grinding bur 10 of FIG. 1(d) is completed. The cross section of the dental grinding bur 10 is as shown in FIG. 1(e). More specifically, the identification part 11a has an axially (in the longitudinal direction of the base 11) mountain-shaped cross-section.

Measuring at a portion 0.45 mm away from the side end of the grinding part 11b of the identification part 11a, the thickness of the coating material is 28 µm, the center is 34 µm, and the portion 0.45 mm away from the lower side of the base 11 is 34 µm. While the maximum coating material thickness is 20 µm or greater, preferably 30 µm or greater in order to make the coating material hard to peel off, it may be appropriately selected according to type of coating material. Note that the limit of the coating material thickness is not particularly specified and it should be a certain thickness possible by coating a typical coating material.

Moreover, while viscosity of the coating material is preferably around 15 to 30 seconds (measured by NK-2), these numerical values are not decided values.

Since the identification part 11a according to the present invention is right near the grinding part 11b, the color and the like of the identification part 11a may be confirmed even when it is used attached to a rotary tool. Moreover, since making a groove is not required, the grinding bur does not weaken.

More specifically, since the identification part 11a according to the present invention is coated with the insulating pigmented coating material A while rotating the base 11, and rotation is continued even after coating, circumferential thickness of the coating film is uniform. Moreover, since the axial thickness is a mountain shape, a thick and difficult to peel off identification part 11a may be obtained.

## Claims

1. A dental grinding bur manufacturing method, comprising the steps of: rotating a rod-shaped base (11) at a rotation speed that allows formation of a mountain shape of a sufficient amount of a coating material (A), which is applied to the rod-shaped base (11), at an axial center of the rod-shaped base (11); applying with a painting member (22) an insulating, pigmented coating material (A) to a portion of a constant width near a grinding part (11b); setting apart the painting member (22) from the base (11) and continuing rotation of the base (11) so that the coating material (A) is pulled to the outer side by centrifugal force and the coating material (A) becomes semidry; stopping rotation of the base (11) and drying the coating material (A); and fixating abrasive grains on the tip side from an identification part (11a) through electro-deposition.

2. The dental grinding bur manufacturing method of Claim 1, wherein the step of stopping rotation of the base (11) and drying the coating material (A) is carried out with the base (11) being retained standing after the base (11) has been removed from a rotator (21).

3. The dental grinding bur manufacturing method of Claim 1 or Claim 2, wherein the painting member (22) has an inclined side (22a) that makes contact with the base (11) to supply the coating material (A) such that it runs down from above the inclined side (22a) to a contact section of the base (11) .

4. The dental grinding bur manufacturing method of any one of Claims 1 to 3, further comprising the step of: attaching enough of the coating material (A) to the painting member (22) with the coating material (A) having some surface tension, and applying the coating material (A) from the painting member (22) to the base (11) so as for the applied coating material (A) to be in an axial mountain shape.

5. A dental grinding bur (10) manufactured by the method of any one of Claims 1 to 4.

## Patentansprüche

1. Herstellungsverfahren für einen Zahnschleifbohrer, umfassend die folgenden Schritte: Rotieren einer stabförmigen Basis (11) mit einer Rotationsgeschwindigkeit, welche die Bildung einer Bergform einer ausreichenden Menge eines Beschichtungsmaterials (A) ermöglicht, die auf der stabförmigen Basis (11) angewendet wird, an einem axialen Zentrum der stabförmigen Basis (11); Aufbringen eines isolierenden, pigmentierten Beschichtungsmaterials (A) mit einem Malelement (22) auf einem Abschnitt mit einer konstanten Breite nahe des Schleifteils (11b); Absetzen des Malelementes (22) von der Basis (11) und Fortsetzen der Rotation der Basis (11), so dass das Beschichtungsmaterial (A) durch Zentrifugalkraft in Richtung der Außenseite gezogen wird und das Beschichtungsmaterial (A) halbtrocken wird; Anhalten der Rotation der Basis (11) und Trocknen des Beschichtungsmaterials (A); und Fixierung von Schleifkörnchen auf der Spitzenseite eines Identifikationsteils (11a) durch Elektroabscheidung.

2. Herstellungsverfahren für einen Zahnschleifbohrer nach Anspruch 1, wobei der Schritt des Unterbrechens der Rotation der Basis (11) und des Trocknens des Beschichtungsmaterials (A) so durchgeführt wird, dass die Basis (11) in stehender Position gehalten wird, nachdem die Basis (11) von einem Rotator (21) entfernt wurde.

3. Herstellungsverfahren für einen Zahnschleifbohrer nach Anspruch 1 oder 2, wobei das Malelement (22) eine geneigte Seite (22a) aufweist, die mit der Basis (11) in Kontakt ist, um das Beschichtungsmaterial (A) derart bereit zu stellen, dass es von oberhalb der geneigten Seite (22a) zu einem Kontaktbereich der Basis (11) herunter rinnt.

4. Herstellungsverfahren für einen Zahnschleifbohrer nach einem der Ansprüche 1 bis 3, ferner umfassend den folgenden Schritt: Anbringen von ausreichend Beschichtungsmaterial (A) an dem Malelement (22), wobei das Beschichtungsmaterial (A) eine gewisse Oberflächenspannung aufweist, und Aufbringen des Beschichtungsmaterials (A) vom Malelement (22) an der Basis (11) so weit, dass das angewendete Beschichtungsmaterial (A) sich in einer axialen Bergform befindet.

5. Zahnschleifbohrer (10), hergestellt durch das Verfahren nach einem der Ansprüche 1 bis 4.

## Revendications

1. Procédé de fabrication d'une fraise de meulage dentaire, comprenant les étapes consistant à : faire tourner une base en forme de tige (11) à une vitesse de rotation qui permet la formation en forme de montagne d'une quantité suffisante de matière de revêtement (A) qui est appliquée sur la base en forme de tige (11), en un centre axial de la base en forme de tige (11) ; appliquer avec un organe d'enduction (22) une matière de revêtement isolant, pigmenté (A) sur une partie à largeur constante à proximité d'une partie de meulage (11b) ; séparer l'organe d'enduction (22) de la base (11) et poursuivre la rotation de la base (11) de manière que la matière de revêtement (A) soit attirée vers le côté extérieur par la force centrifuge et que la matière de revêtement (A) devienne semi-sèche ; arrêter la rotation de la base (11) et faire sécher la matière de revêtement (A) ; et fixer des grains abrasifs sur le côté de la pointe à partir d'une partie d'identification (11a) par dépôt électrolytique.

2. Procédé de fabrication d'une fraise de meulage dentaire selon la revendication 1, dans lequel l'étape consistant à arrêter la rotation de la base (11) et à faire sécher la matière de revêtement (A) est réalisée avec la base (11) maintenue à la verticale, après que la base (11) a été retirée d'un dispositif de rotation (21).

3. Procédé de fabrication d'une fraise de meulage dentaire selon la revendication 1 ou la revendication 2, dans lequel l'organe d'enduction (22) présente un côté incliné (22a) qui entre en contact avec la base (11) pour fournir la matière de revêtement (A), de manière qu'elle s'écoule vers le bas depuis le haut du côté incliné (22a) vers une partie de contact de la base (11).

4. Procédé de fabrication d'une fraise de meulage dentaire selon l'une quelconque des revendications 1 à 3, comprenant en outre l'étape consistant à : fixer suffisamment de matière de revêtement (A) sur l'organe d'enduction (22), la matière de revêtement (A) possédant une certaine tension superficielle, et appliquer la matière de revêtement (A), de l'organe d'enduction (22) sur la base (11), de manière que la matière de revêtement appliquée (A) ait axialement une forme de montagne.

5. Fraise de meulage dentaire (10) fabriquée au moyen du procédé selon l'une quelconque des revendications 1 à 4.
